# DEMANDE DE BREVET EUROPEEN

(11) **EP 2 314 140 A1**
(43) Date de publication de la demande: **27.04.2011**
(21) Numéro de dépôt: 10188161.3
(22) Date de dépôt: 20.10.2010
(51) Int. Cl.: A01B 29/04, A01B 49/06, A01C 5/06

(54) **Machine agricole pour le semis avec un moyen de rappui supplémentaire**

(30) Priorité: 23.10.2009 FR 0957451
(71) Demandeur: KUHN S.A., 67700 Saverne (FR)
(72) Inventeur: Kirch, Michel, 67260, Keskastel (FR)

(57) **Abrégé**

La présente invention concerne une machine agricole pour le semis (1) comportant un châssis (2) s'appuyant au sol par l'intermédiaire de deux roues (3), un timon d'attelage (4) destiné à être lié à son extrémité frontale à un tracteur (5), des éléments semeurs (6), une trémie (7) et au moins deux moyens de rappui (8) s'étendant latéralement et sensiblement en avant desdits éléments semeurs (6) par rapport à la direction d'avance (A).

La machine agricole est remarquable en ce qu'au moins un moyen de rappui supplémentaire (11) s'étend dans la partie centrale de ladite machine agricole (1) et comprend un balancier (12) sur lequel est articulée une paire de roues (13, 14) autour d'un axe (22) dirigé sensiblement horizontalement et transversalement à la direction d'avance (A).

## Description

La présente invention se rapporte au domaine technique général du machinisme agricole et en particulier au domaine du semis. L'invention concerne une machine agricole pour le semis comportant un châssis s'appuyant au sol par l'intermédiaire de deux roues, un timon d'attelage destiné à être lié à son extrémité frontale à un tracteur, des éléments semeurs, une trémie et au moins deux moyens de rappui s'étendant latéralement et sensiblement en avant desdits éléments semeurs par rapport à la direction d'avance.

Une machine de ce genre comporte un châssis porteur s'appuyant sur le sol via deux roues, un timon pour être reliée à un tracteur, des éléments semeurs approvisionnés par une trémie. Cette machine comporte également plusieurs groupes d'outils destinés à effectuer un travail du sol, ils s'étendent transversalement par rapport à la direction d'avance. L'opération préalable au semis est généralement le labour. Le semoir est donc amené à travailler sur un champ qui présente un relief irrégulier dû aux sillons du labour. Pour aplanir ces dénivellations, il est connu de monter des moyens de rappui pour niveler la surface du sol. Ces moyens de rappui sont constitués par des roues disposées à l'avant du châssis, devant les groupes d'outils.

Ces roues de rappui sont réparties uniquement sur les côtés du cadre de telle façon que les pneumatiques arrière du tracteur n'entrent pas en collision avec la machine et notamment avec ces roues lors des manoeuvres. Le relief de surface n'est donc pas effacé dans la zone centrale de la machine puisque cette zone est dépourvue de roues de rappui. A cause de ce relief irrégulier, les outils ainsi que leurs supports travaillant dans cette zone centrale subissent une usure plus importante et plus rapide. Lorsque le tracteur se déplace sur la terre préparée, ses pneumatiques poussent la terre ameublie de part et d'autre en formant un amas de terre et accentuent ainsi encore davantage le relief irrégulier. Ce sont des roues motrices du tracteur qui génèrent ces inégalités sur la surface du sol. Cet amas de terre est plus ou moins important en fonction du type de sol, du pneumatique et du poids du tracteur. Les outils qui doivent répartir cet amas de terre sont donc plus rapidement encombrés et montrent une usure prématurée. De plus cet encombrement provoque une perte de puissance pour le tracteur qui doit réduire sa vitesse d'avance.

La présente invention a pour but de remédier aux inconvénients précités. Elle doit notamment proposer une machine du type ci-dessus permettant aux éléments semeurs d'implanter de la semence dans le sol dans des conditions optimales et homogènes sur toute la largeur de travail.

A cet effet, une importante caractéristique de l'invention consiste en ce qu'au moins un moyen de rappui supplémentaire s'étend dans la partie centrale de ladite machine agricole et comprend un balancier sur lequel est articulée une paire de roues autour d'un axe dirigé sensiblement horizontalement et transversalement à la direction d'avance. Ainsi, les inégalités du terrain se trouvent amorties par l'effet du balancier et la partie centrale est nivelée par l'intermédiaire des roues.

Selon une autre importante caractéristique, les roues sont agencées de manière décalée l'une par rapport à l'autre sur le balancier et la roue avant s'étend sensiblement devant la roue arrière. La roue la plus en avant se situe sur le côté dirigé vers le timon. Grâce à une telle position des roues, l'angle de braquage du tracteur est important ce qui facilite les manoeuvres de demi-tours et réduit les temps des tourtières.

De manière préférentielle, un moyen de rappui supplémentaire s'étend de chaque côté du timon et sensiblement en avant des moyens de rappui compte tenu de la direction d'avance. Avec un relief de surface régulier et nivelé sur toute la largeur de travail, la vitesse d'avance du tracteur n'a plus besoin d'être ralentie et chaque élément semeur peut travailler dans de très bonnes conditions. Par ailleurs, l'usure des outils est sensiblement similaire pour tous les outils de la machine.

D'autres caractéristiques et avantages de l'invention se dégageront de la description qui va suivre en regard des dessins annexés qui ne sont donnés qu'à titre d'exemples non limitatifs de l'invention avec référence. Sur ces dessins :
- la **figure 1** représente, en vue de côté, une machine agricole selon la présente invention attelée à un tracteur,
- la **figure 2** représente, en vue de côté, une machine agricole selon un autre exemple de réalisation,
- la **figure 3** est une vue de dessus partielle de la machine agricole de la figure 2,
- la **figure 4** représente, vu de côté et à une autre échelle, le moyen de rappui supplémentaire de la machine agricole de la figure 2 dans une position de travail,
- la **figure 5** représente, vu de côté et à une autre échelle, le moyen de rappui supplémentaire de la machine agricole de la figure 2 dans une position intermédiaire entre la position de travail et la position de transport.

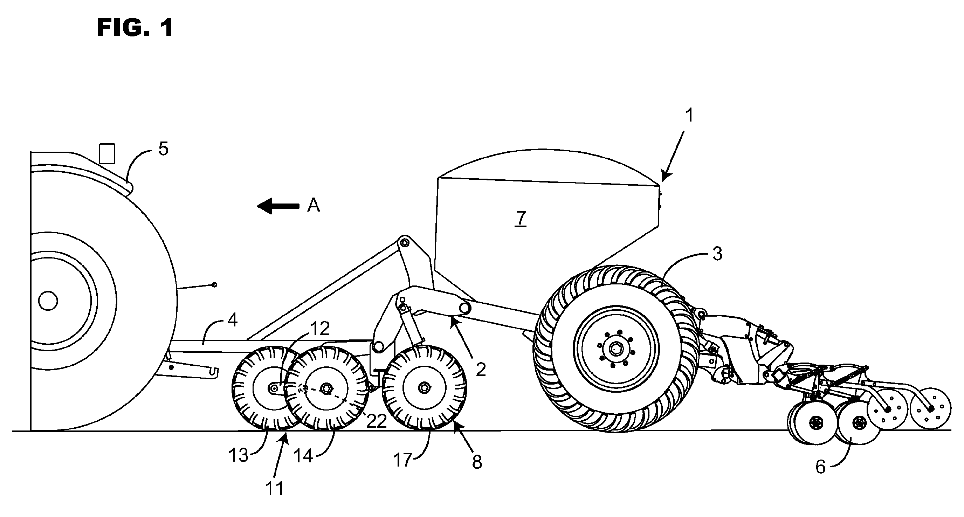

La machine agricole (1) représentée sur la figure 1 comporte un châssis (2) qui s'appuie au sol par l'intermédiaire d'au moins une roue (3). Le châssis (2) repose sur le sol, au travail comme au transport, au moyen de deux roues (3). Ces roues peuvent également être un rouleau. Cette machine (1) comporte un timon d'attelage (4) destiné à être lié à son extrémité frontale à un tracteur (5). Le tracteur (5) entraîne la machine agricole (1) suivant une direction et un sens d'avance indiqué par la flèche (A). Dans la suite de la description, les notions suivantes "avant", "arrière" et "devant", "derrière" sont définies par rapport au sens d'avance (A).

D'après la figure 1, il s'agit d'une machine agricole pour le semis (1). Ce semoir (1) comporte des éléments semeurs (6) dont la fonction est d'implanter des graines dans le sol et une trémie (7) de stockage de graines. Les graines contenues dans la trémie (7) sont acheminées vers les éléments semeurs (6). Les éléments semeurs (6) sont répartis sur une poutre transversale. Les éléments semeurs (6) s'étendent sensiblement à l'arrière du châssis (2) et notamment derrière les roues (3). La trémie (7) se situe au niveau des roues (3) et de préférence sensiblement au-dessus des deux roues (3). Ce semoir comporte également, à l'avant, au moins un moyen de rappui (8). Le châssis (2) se compose d'un cadre central (9) portant deux parties latérales (10), formant un cadre repliable. Il s'agit d'une machine agricole pour le semis de grande largeur. Les parties latérales (10) et le cadre central (9) sont reliés par des organes de couplage et des mécanismes de repliage permettant de faire passer de la position de travail représentée à la figure 1 dans une position de transport. Chaque partie latérale (10) porte au moins un moyen de rappui (8). Ces deux moyens de rappui (8) sont disposés latéralement, de part et d'autre du cadre central (9). Un moyen de rappui (8) a pour fonction de rappuyer et de niveler le sol et est composé par une roue, un rouleau ou équipement similaire. Les moyens de rappui (8) s'étendent sensiblement en avant des éléments semeurs (6) compte tenu de la direction d'avance (A).

Selon une importante caractéristique de l'invention, ladite machine agricole (1) comporte au moins un moyen de rappui supplémentaire (11) qui s'étend dans la partie centrale de la machine (1) et comprend un balancier (12) sur lequel est articulée une paire de roues (13, 14) autour d'un axe (22) dirigé sensiblement horizontalement et transversalement à la direction d'avance (A). Grâce à ces caractéristiques, les inégalités du terrain se trouvent amorties par l'effet du balancier et la partie centrale de la machine (1) est nivelée par l'intermédiaire des roues (13, 14). A la lumière de la figure 1, le moyen de rappui supplémentaire (11) s'étend à l'avant des éléments semeurs (6) et sensiblement en avant des moyens de rappui (8) compte tenu de la direction d'avance (A). Les roues (13, 14) du moyen de rappui supplémentaire (11) ne sont donc pas alignées avec les moyens de rappui (8), elles sont décalées vers l'avant compte tenu de la direction d'avance (A).

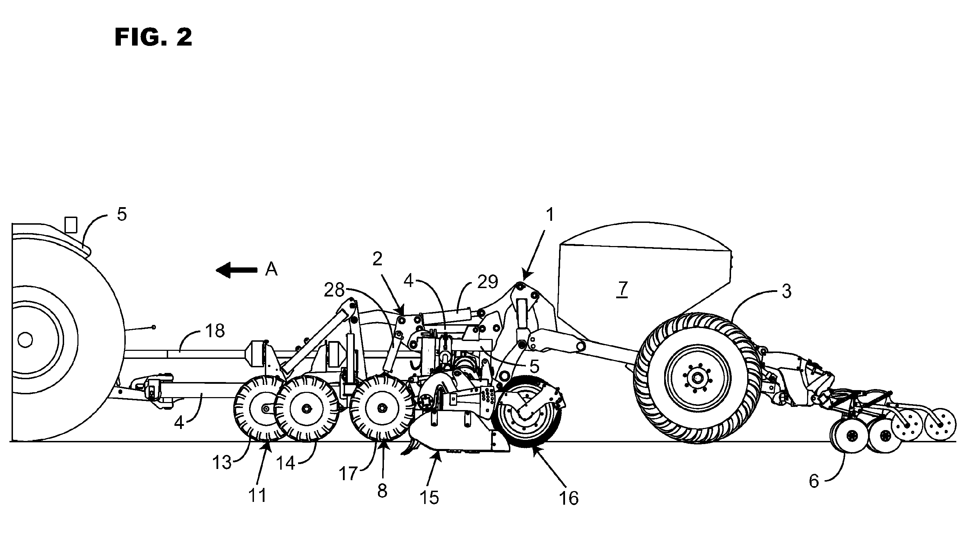

La figure 2 représente un autre exemple de réalisation d'une machine agricole pour le semis conforme à l'invention. Cette machine est similaire à la machine de la figure 1, elle comporte, en sus, au moins un groupe d'outils (15, 16) destiné à travailler le sol et disposé transversalement par rapport à la direction d'avance (A). Ce semoir (1) comprend un premier groupe d'outils de travail du sol (15) et un second groupe d'outils (16) constitué d'un rouleau. Ce rouleau est disposé à l'arrière du châssis (2), derrière le premier groupe d'outils (15). Le rouleau permet un rappui ciblé en pressant le sol devant les éléments semeurs (6) et en brisant les mottes pour obtenir des conditions optimales de semis. Le rouleau élimine les irrégularités du sol avant l'implantation des graines. Le premier groupe d'outils (15) est un outil de reprise superficielle de labour et de préparation de lit de semences. Le rouleau a également comme fonction de permettre le réglage de la profondeur de travail du premier groupe d'outils (15). Dans l'exemple représenté, il est constitué d'une herse rotative comprenant au moins une poutre transversale supportant un certain nombre de rotors muni chacun de dents. La poutre contient des organes d'entraînement destinés à l'entraînement des rotors. Les rotors sont entraînés en rotation autour d'un axe vertical via une transmission (18) par la prise de force du tracteur (5). Par la rotation du rotor avec les dents, la terre est émiettée et mélangée. Le rouleau disposé derrière permet de contrôler la profondeur de travail de la herse rotative. Il écrase les mottes et tasse la surface du sol. Grâce au balancier (12), l'appui des deux roues (13, 14) au sol n'est plus hyperstatique. Les deux roues (13, 14) restent toujours au sol lors du travail et suivent les dénivellations. Ceci permet aussi de maintenir le timon d'attelage (4) plus ou moins parallèle à la surface du sol. Dans le cas d'une machine entraînée par la prise de force, il est recommandé de maintenir la transmission (18) sensiblement parallèle au sol afin de garantir un bon fonctionnement et de prévenir toute dégradation.

Selon une variante non représentée, le premier groupe d'outils (15) est constitué de deux trains de disques. Les disques du premier train sont inclinés par rapport à la verticale et les disques du deuxième train sont inclinés dans une direction opposée. Les disques sont liés au châssis (2) via des bras respectifs. Chaque bras étant suspendu de manière élastique sur le châssis (2). Ces disques sont avantageusement bombés et leur bord peut être lisse ou crénelé.

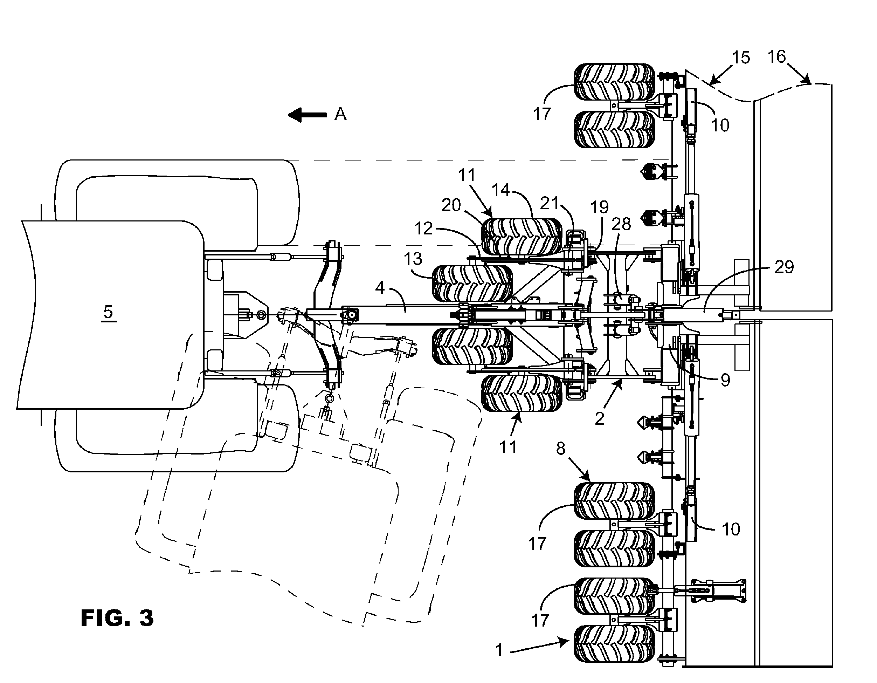

D'après la figure 3 représentant, vue de dessus, la machine agricole pour le semis (1) de la figure 2, chaque partie latérale (10) porte au moins un moyen de rappui (8). Sur cette figure 3, la partie droite du semoir n'est représentée que partiellement et les groupes d'outils (15, 16) sont représentés de manière schématique. Chaque partie latérale (10) porte deux moyens de rappui (8) reliés directement aux parties latérales (10) du châssis (2). Les moyens de rappui (8) sont relevés et abaissés avec les groupes d'outils (15, 16). Le moyen de rappui (8) présente, de préférence, une paire de roues (17) permettant une meilleure adaptation à la surface du sol. Ces roues (17) sont amenées à pivoter autour d'un axe sensiblement horizontal et perpendiculaire à la direction d'avance (A) pour régler le rappuyage au sol. Elles peuvent s'effacer lors de la rencontre d'un obstacle grâce à leur articulation élastique. La pression au sol de ces roues est réglée et adaptée via un vérin de réglage.

Sur cette figure 3, on remarque que les moyens de rappui (8) et les pneumatiques arrières du tracteur (5) rappuient une grande partie de la largeur de travail de la machine agricole (1). La trace des pneumatiques du tracteur (5) dans le sol est effacée à l'aide d'efface-traces. Les moyens de rappui (8) s'étendent au-delà du tracteur, entre le flanc extérieur du pneumatique et l'extrémité du châssis (2).

La partie centrale est rappuyée à l'aide d'au moins un moyen de rappui supplémentaire (11). La largeur de travail du (des) moyen(s) de rappui supplémentaire(s) (11) correspond sensiblement à la distance entre les flancs intérieurs des pneumatiques arrière du tracteur (5). Dans l'exemple représenté sur les figures, la machine (1) présente avantageusement deux moyens de rappui supplémentaires (11). Un moyen de rappui supplémentaire (11) s'étendant de part et d'autre du timon d'attelage (4). Grâce à ces deux moyens de rappui supplémentaires (11), les conditions de travail pour les éléments semeurs (6) et notamment des groupes d'outils (15, 16) sont optimales car la zone centrale est également nivelée et rappuyée. En présence d'un relief de surface régulier sur toute la largeur de travail, même dans la zone centrale, il n'y a plus de perte de puissance pour le tracteur et la vitesse d'avance peut même être augmentée. Les éléments semeurs (6) et/ou les outils du premier groupe (15) présentent une usure régulière, similaire sur toute la largeur de travail de la machine (1).

Les moyens de rappui supplémentaires (11) s'étendent à l'avant du premier groupe d'outils (15) et sensiblement en avant des moyens de rappui (8) compte tenu de la direction d'avance (A). Les roues (13, 14) ne sont donc pas alignées avec les roues (17), elles sont décalées vers l'avant compte tenu de la direction d'avance (A). D'une manière préférentielle, la taille et la largeur des roues (13, 14 et 17) sont identiques. Sur la figure 3, la machine (1) est au travail. Les roues (13, 14 et 17) roulent sur le sol et rappuient le sol. Les roues (13, 14) sont décalées l'une par rapport à l'autre, compte tenu de la direction d'avance (A). Cette position décalée permet une meilleure adaptation au sol car le suivi des dénivellations du sol est amélioré. Le décalage des roues (13, 14) sur le balancier (12) apporte de la stabilité permettant d'avancer à plus grande vitesse et évite le soulèvement du timon d'attelage (4). Ce décalage permet aussi un meilleur dégagement des débris végétaux et donc moins de bourrage. Sur la figure 2, c'est le deuxième groupe d'outils (16) : le rouleau qui est le référentiel pour la profondeur de travail des outils du premier groupe (15). Le montage des roues (13, 14 et 17) est tel qu'il n'y a pas d'appui hyperstatique au sol et que le timon d'attelage (4) ne puisse pas être soulevé. En effet, les roues (13, 14) sont montées sur un balancier (12) et les roues (17) sont montées sur des articulations élastiques.

La roue la plus en avant (13) se situe sur le côté dirigé vers le timon d'attelage (4) et l'autre roue (14) se situe sur le côté opposé dudit balancier (12). Grâce à la position reculée de la roue arrière (14), les tourtières pour les demi-tours en bout de champ sont réduites, les manoeuvres du tracteur sont facilitées et plus rapide. La position latérale de la roue arrière (14) est définie pour qu'elle puisse niveler le billon de terre créé par le flanc intérieur du pneumatique arrière du tracteur. La partie arrière d'un tracteur, ayant braqué pour un demi-tour, ainsi que l'extrémité avant du timon d'attelage (4) sont représentées en traits discontinus sur la figure 3.

Dans une variante de réalisation non représentée, le tracteur (5) est équipé de roues jumelées. Dans ce cas, chaque partie latérale (10) ne porte qu'un seul moyen de rappui (8).

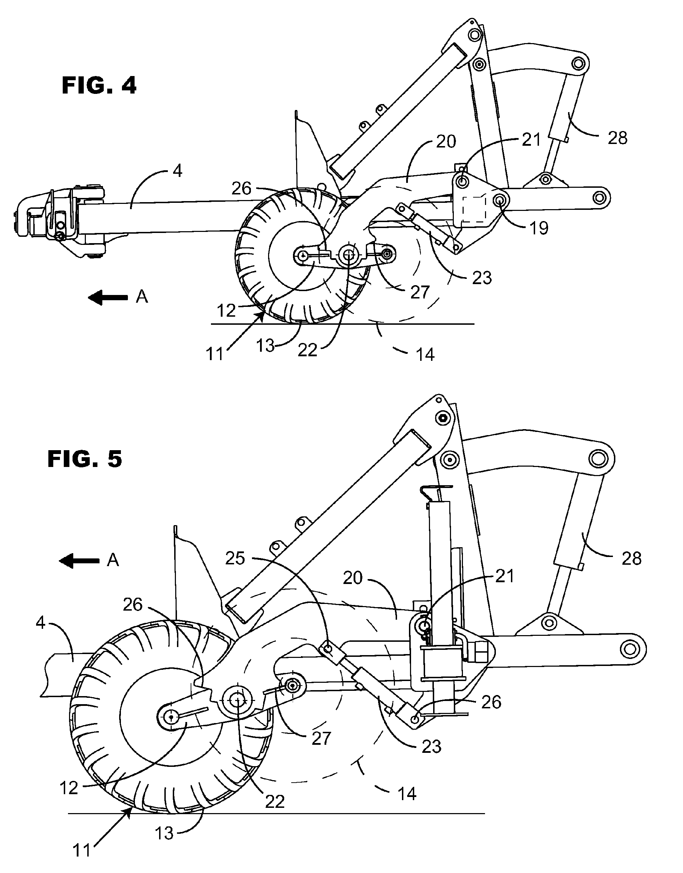

Les figures 4 et 5 représentent, respectivement, le moyen de rappui supplémentaire (11) dans une configuration de travail et dans une configuration intermédiaire avant d'arriver à la configuration de transport. Sur ces figures, la roue arrière (14) est représentée de manière simplifiée en traits discontinus. Le timon d'attelage (4) est relié au châssis (2) et notamment au cadre central (9) au moyen d'articulations (19) d'axe sensiblement horizontal et perpendiculaire à la direction d'avance (A). Chaque moyen de rappui supplémentaire (11) est lié au timon d'attelage (4) au moyen d'un bras (20). Ce bras (20) est dirigé vers l'avant. Il est relié d'une part au timon d'attelage (4) via un axe (21) sensiblement horizontal et perpendiculaire à la direction d'avance (A) et est relié au balancier (12) via un axe (22) sensiblement horizontal et perpendiculaire à la direction d'avance (A). Ainsi chaque balancier (12) présente un axe (22) respectif permettant sa liaison audit timon (4) via un bras (20) articulé respectif.

Chaque moyen de rappui supplémentaire (11) est maintenu au sol pour le travail et est soulevé pour les manoeuvres et le transport au moyen d'un organe de manoeuvre (23) respectif. L'organe de manoeuvre (23) est constitué d'un vérin hydraulique du type à double effet. Grâce à ce vérin, la pression exercée sur le sol par les roues (13, 14) est réglable. Lorsque les roues (13, 14) passent sur des dénivellations elles pivotent avec le balancier (12) autour de l'axe (22) sensiblement horizontal. Grâce au balancier (12), les déplacements en hauteur des roues (13, 14) ne sont que partiellement transmis au timon d'attelage (4), il y a un effacement d'obstacle et les inégalités du terrain se trouvent donc amorties. Chaque organe de manoeuvre (23) est lié au timon (4) via une articulation (24) et est lié au bras (20) via une articulation (25). L'axe des articulations (24, 25) s'étend sensiblement horizontalement et perpendiculairement à la direction d'avance (A).

De manière avantageuse, l'axe (22) du balancier (12) est décentré. L'axe (22) se situe entre les axes des roues (13, 14). Il se situe, de préférence, plus près de l'axe de la roue arrière (14) que de celui de la roue avant (13). L'axe (22) est décalé en arrière par rapport au centre de gravité dudit balancier (12). Lors de l'abaissement du moyen de rappui supplémentaire (11), les roues (13, 14) viennent en appui simultanément au sol, la roue avant (13) se pose automatiquement au sol avant la roue arrière (14). Le pivotement du balancier (12) autour de l'axe (22) est limité par deux butées (26, 27). Ces butées sont solidaires du bras (20). Ces butées (26, 27) servent lors de l'abaissement ou du relevage du moyen de rappui supplémentaire (11).

Sur la figure 5, l'organe de manoeuvre (23) est représenté dans une position intermédiaire dans laquelle la tige du vérin amorce sa sortie. Le bras (20) est relevé en pivotant autour de l'axe (21) ce qui entraîne le pivotement du balancier (12) autour de l'axe (22) et la roue arrière (14) est alors relevée par rapport au sol. Lorsque le balancier (12) arrive en contact avec la butée arrière (27), la roue avant (13) s'éloigne du sol. L'organe de manoeuvre (23) permet de régler la pression d'appui des roues (13, 14) sur le sol. D'une manière avantageuse, la pression d'appui au sol des roues (13, 14 et 17) est sensiblement identique pour que le rappui soit homogène sur toute la largeur de la machine (1). Pour les demi-tours, le châssis (2) est soulevé par rapport au sol par l'intermédiaire de vérins (28, 29) ce qui permet d'écarter les groupes d'outils (15, 16) de la surface du sol ainsi que les moyens de rappui (8). Le circuit d'alimentation des vérins (28, 29) est tel qu'il permet également une alimentation simultanée de l'organe de manoeuvre (23) pour soulever le moyen de rappui supplémentaire (11).

Sur la vue de dessus, figure 3, on peut voir que les roues avant (13) sont disposées de part et d'autre du timon d'attelage (4). La bande de terre située sous le timon (4) n'est donc pas nivelée. Comme cette bande de terre est éloignée des pneumatiques du tracteur (5) et ne présente qu'une largeur réduite, son influence sur le relief de surface est limitée. Le travail des éléments semeurs (6) et de la herse rotative n'est pas perturbé, la vitesse d'avancement du semoir n'a pas besoin d'être réduite. Selon une variante distincte non représentée, les roues (13, 14) s'étendent sous le timon d'attelage (4) de manière à ce qu'il n'y a plus de bande de terre non nivelée.

Il est bien évident que l'invention n'est pas limitée aux modes de réalisations décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Machine agricole pour le semis (1) comportant un châssis (2) s'appuyant au sol par l'intermédiaire de deux roues (3), un timon d'attelage (4) destiné à être lié à son extrémité frontale à un tracteur (5), des éléments semeurs (6), une trémie (7) et au moins deux moyens de rappui (8) s'étendant latéralement et sensiblement en avant desdits éléments semeurs (6) par rapport à la direction d'avance (A), ***caractérisée en ce qu'***au moins un moyen de rappui supplémentaire (11) s'étend dans la partie centrale de ladite machine agricole (1) et comprend un balancier (12) sur lequel est articulée une paire de roues (13, 14) autour d'un axe (22) dirigé sensiblement horizontalement et transversalement à la direction d'avance (A).

2. Semoir selon la revendication 1, ***caractérisé en ce que*** ledit axe (22) relie ledit balancier (12) audit timon d'attelage (4) par l'intermédiaire d'un bras (20).

3. Semoir selon la revendication 1 ou 2, ***caractérisé en ce que*** lesdites roues (13, 14) sont agencées de manière décalée l'une par rapport à l'autre sur ledit balancier (12), compte tenu de la direction d'avance (A), ladite roue avant (13) s'étend sensiblement devant ladite roue arrière (14).

4. Machine agricole selon la revendication 3, ***caractérisée en ce que*** ladite roue (13) la plus en avant se situe sur le côté dirigé vers ledit timon d'attelage (4) et que l'autre roue (14) se situe sur le côté opposé dudit balancier (12).

5. Semoir selon l'une quelconque des revendications 2 à 4, ***caractérisé en ce que*** ledit axe (22) s'étend entre les axes desdites roues (13, 14), ledit axe (22) est décalé en arrière par rapport au centre de gravité dudit balancier (12).

6. Machine agricole selon l'une quelconque des revendications 1 à 5, ***caractérisée en ce que*** le parcours pendulaire dudit balancier (12) est limité par des butées (26, 27) respectives.

7. Semoir selon l'une quelconque des revendications 1 à 6, ***caractérisé en ce* que** ledit au moins un moyen de rappui supplémentaire (11) s'étend sensiblement en avant desdits moyens de rappui (8) compte tenu de la direction d'avance (A).

8. Semoir selon l'une quelconque des revendications 1 à 7, ***caractérisé en ce* qu'**un moyen de rappui supplémentaire (11) s'étend de chaque côté dudit timon d'attelage (4) et que chacun est lié audit timon d'attelage (4) par l'intermédiaire d'un axe (21) respective d'axe sensiblement horizontal et transversal à la direction d'avance (A).

9. Semoir selon l'une quelconque des revendications 1 à 8, ***caractérisé en ce que*** la largeur desdits moyens de rappui supplémentaire (11) correspond sensiblement à la distance entre les flancs intérieurs des pneumatiques arrière dudit tracteur (5).

10. Semoir selon l'une quelconque des revendications 1 à 9, ***caractérisé en ce qu*'**il comporte au moins un groupe d'outils (15, 16) disposé entre lesdits éléments semeurs (6) et lesdits moyens de rappui (8) compte tenu de la direction d'avance (A), chaque moyen de rappui supplémentaire (11) s'étend à l'avant d'un groupe d'outils (15, 16).
